# EUROPEAN PATENT SPECIFICATION

(11) **EP 1 132 301 B1**
(45) Date of publication and mention of the grant of the patent: **22.12.2004**
(21) Application number: 01200878.5
(22) Date of filing: 08.03.2001
(51) Int. Cl.: B65B 43/44

(54) **Apparatus for feeding containers**
Vorrichtung zum Zuführen von Behältern
Dispositif pour alimenter des récipients

(30) Priority: 09.03.2000 JP 2000064937
(43) Date of publication of application: 12.09.2001
(73) Proprietor: Shikoku Kakoki Co., Ltd., Itano-gun, Tokushima 771-0287 (JP)
(72) Inventor: Hashimoto, Seiji, Shikoku Kakoki Co., Ltd., Itano-gun, Tokushima 771-0287 (JP); Okada, Masato, Shikoku Kakoki Co., Ltd., Itano-gun, Tokushima 771-0287 (JP); Iuchi, Tetsuya, Shikoku Kakoki Co., Ltd., Itano-gun, Tokushima 771-0287 (JP); Ueda, Michio, Shikoku Kakoki Co., Ltd., Itano-gun, Tokushima 771-0287 (JP)
(74) Representative: Dorna, Peter

(56) References cited:
- GB-A- 953 231
- JP-A- 4 057 721
- US-A- 3 258 155
- US-A- 4 157 767

## Description

### BACKGROUND OF THE INVENTION

The present invention relates to container feeding apparatus for use in feeding to packaging machines cuplike containers to be filled with a dessert food such as custard pudding, jelly or yogurt as described in the preamble of claim 1.

As disclosed, for example, in JP-U 63-134903 (1988) or in US-A-3,258,155 or in GB-A-953231, container feeding apparatus of the type mentioned are already known, which comprise a magazine disposed above container holders to be transported successively to a feeding station and adapted to accommodate a stack of cuplike containers each with its opening up while rendering the container free to fall under gravity, transport means for taking out the containers in the magazine one by one from the lowermost position of the stack and transporting the container to the container holder, and means for removing extraneous matter from inside the container after causing the holder to hold the container. The extraneous matter removing means has a vertical suction pipe provided with an opening at its lower end and movable into and out of the container.

With the feeding apparatus described, extraneous matter can be drawn up by suction by the pipe free of trouble if light, whereas the suction pipe encounters difficulty in drawing out heavy extraneous matter. Further the removal of such matter by suction requires a large amount of air, entailing the tendency of using a ring blower of greater capacity. The extraneous matter removing means needs to be installed above the conveyor of the packaging machine and therefore increases the length of the machine.

### SUMMARY OF THE INVENTION

An object of the present invention is to provide a container feeding apparatus which is adapted to reliably remove extraneous matter with a reduced amount of air even if the matter is heavy without the necessity of installing extraneous matter removing means above the conveyor of the packaging machine.

The present invention provides a container feeding apparatus according to the above preamble and having the characterizing features of claim 1.

When the transport means has a holding member for releasably holding the container, and if the holding member has an extraneous matter suction opening to be opposed to the opening of the container thereby held, extraneous matter can be drawn into the suction opening when falling. Extraneous matter can then be collected reliably without scattering.

When the transport means has a holding member for releasably holding the container, and if an air nozzle is disposed with an outlet directed to the inside of the container as held by the holding member, the extraneous matter within the container can be forcibly blown off and reliably removed even if adhering to the container.

When the air nozzle is inserted through the suction opening and has an outlet projecting outward from the suction opening, extraneous matter can be blown off efficiently by the air nozzle and collected efficiently by suction.

When the holding member has a holding face provided with the suction opening and causing the portion of the container defining its opening to come into contact with an edge portion thereof defining the suction opening, and movable retaining pieces capable of releasably holding the container opening portion in contact with the edge portion of the holding face, the container can be reliably held by the holding member and released from the member.

When the transport means has a horizontal rotatable rod provided with the holding member with the holding face directed radially outwardly of the rod and supported by a lift member so as to be positioned between the container holder and the magazine, and when the rotatable rod has a collecting channel formed therein in communication with the suction opening, the extraneous matter drawn into the suction opening can be collected through the rotatable rod without necessitating provision of a particular duct or the like for collection. This serves to compact the apparatus.

The transport means may comprise a drive mechanism for rotating the rotatable rod, moving the lift member upward and downward and operating the retaining pieces, the drive mechanism being operable to bring the holding face into contact with the opening portion of the container as turned upside down at the lowermost position of the stack in the magazine, to cause the retaining pieces to hold the container opening portion, to lower and invert the container, and to release the retaining pieces from the container opening portion as directed upward above the container holder. The container can then be transported reliably and smoothly from the magazine to the container holder.

When the apparatus is provided with lead-in means for guiding the stack into the magazine with the containers turned upside down, the container stack can be supplied to the magazine without necessitating a manual procedure.

When the lead-in means comprises a stacker disposed at one side of the magazine for accommodating the stack with container openings up, and transfer means for transferring the stack from the stacker to the magazine and inverting the stack during the transfer, the container stack can be supplied to the stacker in the usual posture, i.e., with the container openings up. This permits use of a stacker already known.

### BRIEF DESCRIPTION OF THE DRAWINGS

FIG. 1 is a view in vertical longitudinal section of a container feeding apparatus embodying the invention;
FIG. 2 is a plan view of the feeding apparatus;
FIG. 3 is a view in longitudinal section showing on an enlarged scale part of FIG. 1 including a transfer magazine;
FIG. 4 is a fragmentary view in horizontal cross section taken along the line IV-IV in FIG. 3 to show the magazine;
FIG. 5 is a perspective view of the magazine;
FIG. 6 is a view in vertical longitudinal section taken along the line VI-VI in FIG. 1 and showing an inverting device;
FIG. 7 is a view in vertical longitudinal section taken along the line VII-VII in FIG. 6:
FIG. 8 is a fragmentary view in section taken along the line VIII-VIII in FIG. 6 and showing the inverting device;
FIG. 9 is a fragmentary view in section taken along the line IX-IX in FIG. 6 and showing the inverting device;
FIG. 10 is a perspective view of the inverting device; and
FIG. 11 is a plan view taken along the line XI-XI in FIG. 7 and showing a feeding station and the vicinity thereof.

### DESCRIPTION OF THE PREFERRED EMBODIMENT

An embodiment of the present invention will be described below with reference to the drawings.

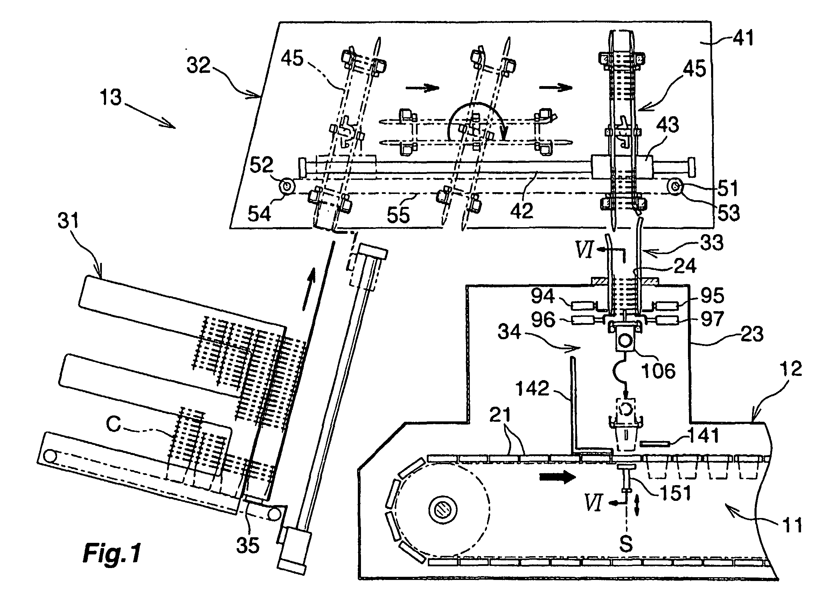

In the following description, the term "front" refers to the side (right-hand side of FIG. 1) toward which containers are transported by a conveyor, and the term "rear" to the opposite side. The terms "left" and "right" refer respectively to the left and right sides of the apparatus as it is seen from the front rearward.

FIG. 1 shows a container feeding station S of a packaging machine and the vicinity thereof.

The packaging machine comprises a container conveyor 11, a chamber 12 accommodating the conveyor 11, and a container feeding apparatus 13 for feeding containers to the conveyor 11.

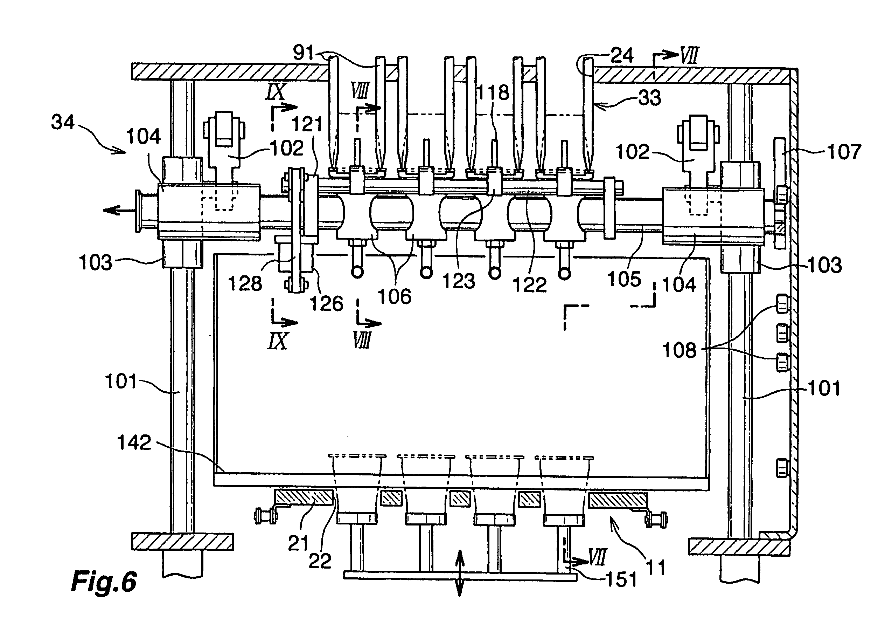

The conveyor 11 is a slat conveyor having a transport path extending forward, and is intermittently driven so as to halt slats 21 one after another at the feeding station S. Each slat 21 has four container retaining holes 22 arranged in a row (FIG. 6).

The chamber 12 is provided at a rear portion of its top wall with an upward extension 23. The top wall of the extension 23 has four container feeding holes 24 corresponding to the four container retaining holes 22 in the slat 21 brought to a halt at the feeding station S.

The container feeding apparatus 13 comprises a stacker 31 disposed to the rear of the chamber 12 for accommodating stacks C of many cuplike containers each with the opening up, a transfer device 32 for receiving stacks C from the stacker 31 and forwardly transporting the containers as turned upside down by inverting the stacks C, a separating magazine 33 for receiving the stacks C forwarded by the transfer device 32 and accommodating the containers as turned upside down, and a transport device 34 for taking out the containers in the magazine 33 one by one from the lowermost position of each stack C in the magazine and delivering the containers to the slat 21 while inverting the containers.

The stacker 31 accommodates stacks C in four rows extending from the front rearward and arranged side by side transversely of the apparatus, i.e., in the left-to-right direction, and has a lifter 35. The lifter 35 lifts the foremost stack C from each row of stacks C, i.e., four stacks, by one cycle of operation. The stacks C in the stacker 31 are leaned forward at an angle of 15 degrees from a vertical, and the four stacks C are lifted in this posture by the lifter 35.

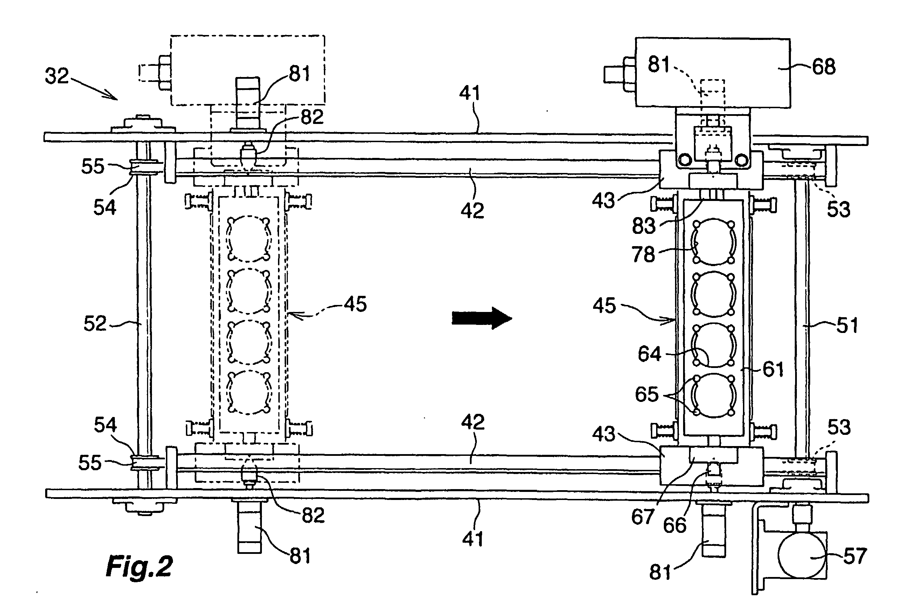

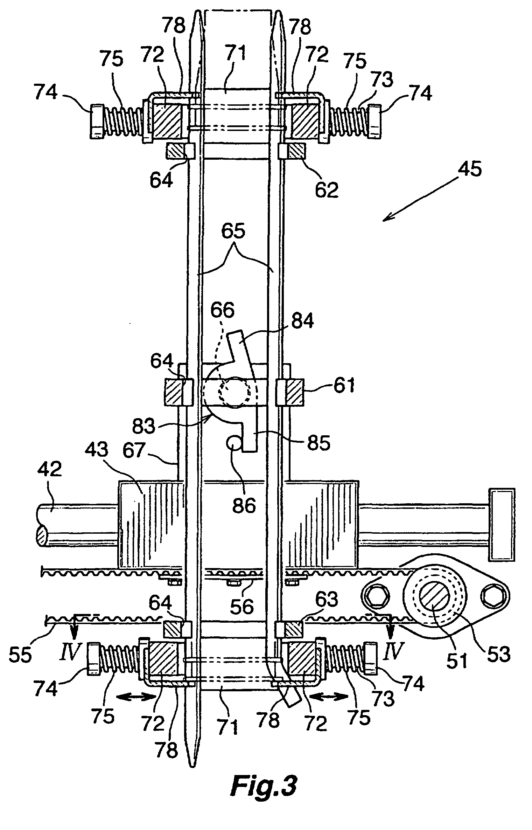

With reference to FIGS. 2 and 3 in addition to FIG. 1, the transfer device 32 comprises a pair of left and right vertical support plates 41 opposed to each other and extending from above the stacker 31 to above the separating magazine 33, a pair of opposite horizontal guide rails 42 provided along the respective opposed surfaces of the support plates 41, a pair of opposite sliders 43 supported by the respective guide rails 42, and a transfer magazine 45 provided between and attached to the respective sliders 43 and pivotally movable forward and rearward.

A horizontal drive shaft 51 and a driven shaft 52 extend transversely of the apparatus and attached respectively to the front and rear ends of the opposite support plates 41. In proximity to the opposed surfaces of the support plates 41, drive sprockets 53 are fixed to opposite end portions of the drive shaft 51, and driven sprockets 54 to opposite end portions of the driven shaft 52. The left end of the drive shaft 51 extends through the left support plate 41 to project leftward beyond the plate 41. A motor 57 is coupled to the projection (FIG. 2). At each of the left and right sides of the transfer device 32, a toothed belt 55 is reeved around the drive sprocket 53 and the driven sprocket 54. The upper path of travel of the toothed belt 55 is connected by an attachment 56 to the corresponding slider 43.

As shown in detail mainly in FIGS. 3 to 5, the transfer magazine 45 comprises a central holding plate 61, and a lead-in holding plate 62 and a lead-out holding plate 63 arranged at opposite sides of the plate 61. In corresponding relation with the four container feeding holes 24, four container inserting holes 64 are formed in each of these central, lead-in and lead-out holding plates 61, 62, 63. These holding plates are interconnected by four guide rods 65 attached to the plate edge portion defining each of the four inserting holes 64 formed in each plate.

The central holding plate 61 has a pair of horizontal pivots 66 fixed to respective opposite ends thereof and projecting outward leftward and rightward. The pivots 66 are supported by opposite bearings 67 mounted on the respective sliders 43. The right pivot 66 is projected rightward beyond the right bearing 67, and a rotary actuator 68 mounted on the right slider 43 is connected to the projection (FIG. 2).

Positioned between the central holding plate 61 and the right bearing 67 is a contact member 83 fixed to the right pivot 66. The contact member 83 has a lead-in arm 84 and a lead-out arm 85 which make an angle of about 165 degrees therebetween. Projecting leftward from the right bearing 67 is a horizontal pin stopper 86 for causing these arms 84, 85 to alternately come into contact with. The contact of the lead-out arm 85 with the stopper 86 as shown in FIG. 3 holds the guide rods 65 in a vertical posture with the lead-out holding plate 63 down (solid lines in FIG. 1), while the contact of the lead-in arm 84 with the stopper 86 holds the guide rods 65 in the same leaned posture (phantom lines in FIG. 1) as the stacks C within the stacker 31, with the lead-in holding plate 62 down.

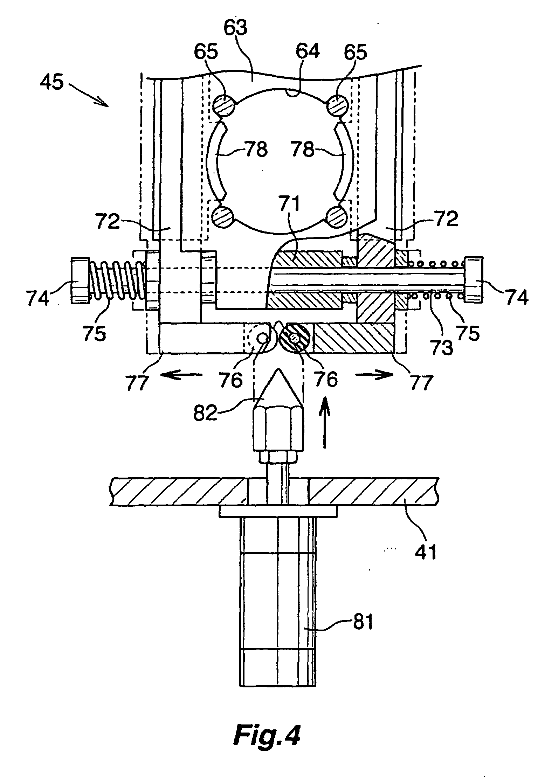

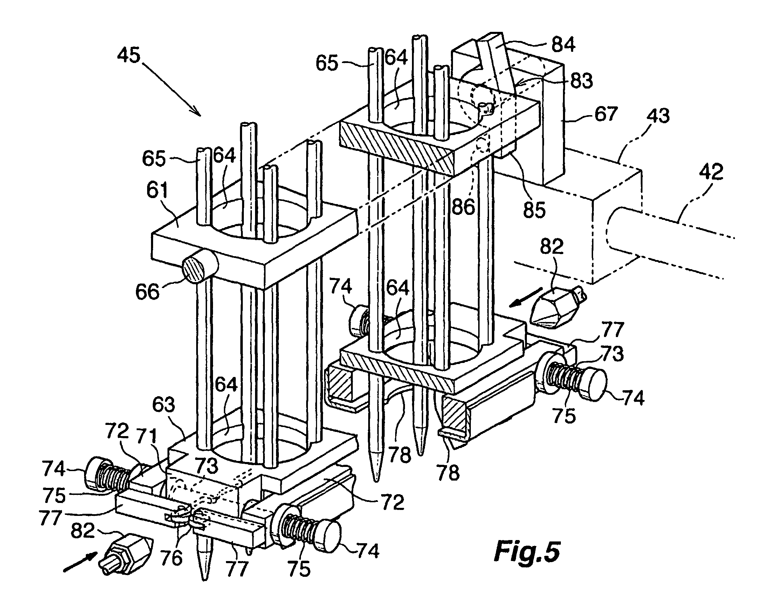

As shown in detail in FIGS. 4 and 5, the lead-out holding plate 63 is provided at its left end with a support portion 71 projecting toward the ends of the guide rods 65. A pair of front and rear opening bars 72 are so arranged that the support portion 71 is held between their left ends from the front and rear. A horizontal support rod 73 extends through the left ends of the support portion 71 and the two opening bars 72. The rod 73 is provided with a flange 74 at each of opposite ends thereof. Compression springs 75 are fitted around the support rod 73 respectively between the front opening bar 72 and the front flange 74 and between the rear opening bar 72 and the rear flange 74. At the left ends of the opening bars 72, brackets 77 carry a pair of rollers 76 opposed to each other as spaced apart by a small distance. The opening bars 72 are provided with stoppers 78 L-shaped in cross section and opposed to each other. When seen from above as shown in FIG. 4, the stoppers 78 have their opposed inner ends partly advanced into the container inserting hole 64.

The stoppers 78 are operated by an opening fluid pressure cylinder 81. An actuating member 82 having a conical head is attached to the piston rod of the cylinder 81. When the actuating member 82 is pressed against the rollers 76, the rollers 76 are separated along with the opening bars 72, retracting the inner ends of the stoppers 78 from the container inserting hole 64.

As shown in FIG. 2, the stopper opening fluid pressure cylinder 81 is provided at each of two locations, one of which is the position where the rollers 76 can be pushed by the actuating member 82 when the transfer magazine 45 is brought to above the separating magazine 33. The other location is the position where the two rollers 76 can be pushed by the actuating member 82 when the transfer magazine 45 is located above the stacker 31.

Like the left end of the lead-out holding plate 63, the right end thereof is provided with a support portion 71. Opening bars 72 are supported at their right ends by a support rod 73 extending through the support portion 71.

Although not described in detail, the lead-in holding plate 62, like the lead-out holding plate 63, is provided with a support portion 71 and a support rod 73 at each of opposite ends thereof, with opening bars 72 supported by the support rod 73. Stoppers 78 are attached to the opening bars 72 and opened by a fluid pressure cylinder 81 by means of rollers 76.

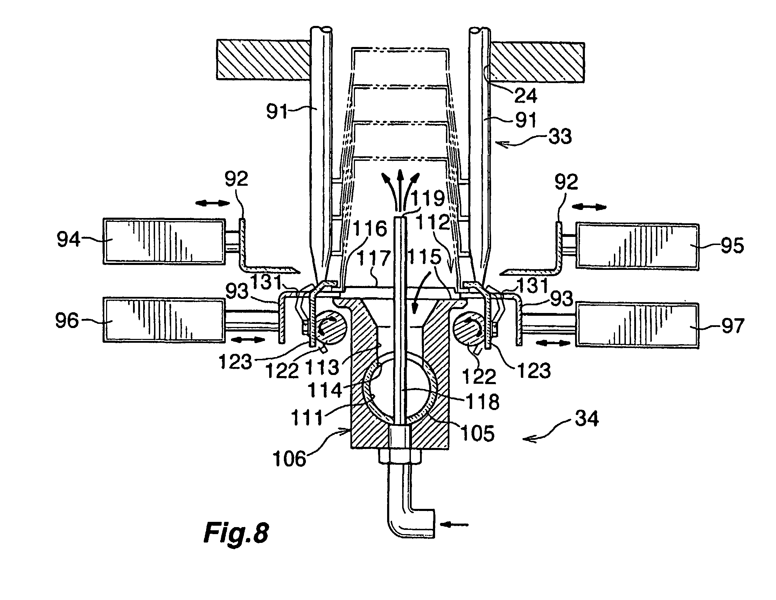

With reference to FIGS. 6 and 8, the separating magazine 33 is provided at an intermediate portion of its height with four vertical guide rods 91 along the plate edge portion defining each container feeding hole 24, i.e., 16 guide rods 91 for all the holes 24. Arranged in the vicinity of lower ends of the guide rods 91 are a pair of front and rear upper stoppers 92 and a pair of front and rear lower stoppers 93. The stoppers 92, 93 are individually operated by fluid pressure cylinders 94 to 97.

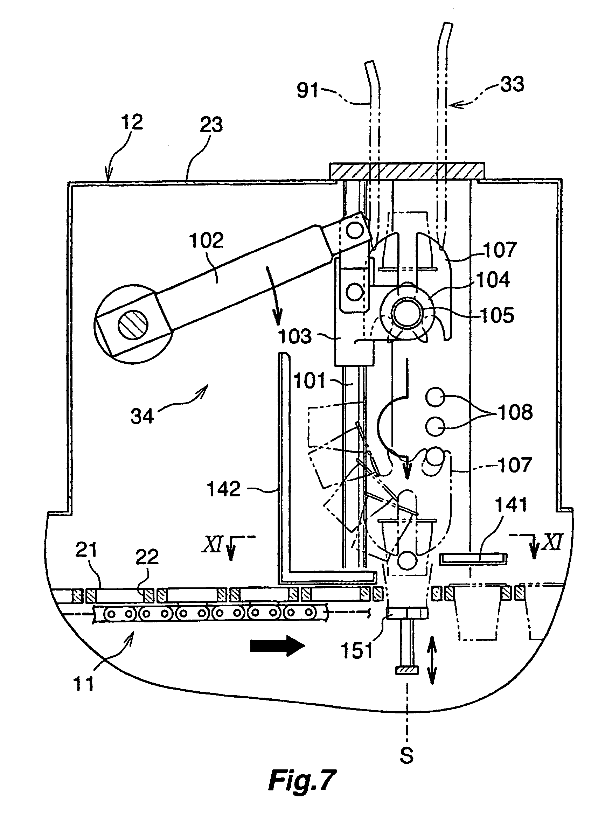

With reference to FIGS. 6 and 7, the transport device 34 comprises a pair of left and right vertical guide posts 101 arranged at opposite sides of the feeding station S, a pair of vertical slide sleeves 103 fitted around the respective posts 101 and each connected to the outer end of a lift arm 102, a pair of horizontal slide sleeves 104 integral with the respective sleeves 103, a horizontal rotatable rod 105 fitted in the sleeves 104 to extend therebetween transversely of the apparatus, and four container holding members 106 provided on the rotatable rod 105 and corresponding to the container feeding holes 24.

A cam plate 107 is fixed to the right end of the rotatable rod 105. A plurality of roller cams 108 are fixedly arranged along a path of movement of the cam plate. The rotatable rod 105 is reversibly rotated through 180 degrees by moving the cam plate 107 upward and downward while bringing the cam plate into engagement with the roller cams 108 in succession.

The rotatable rod 105 is in the form of a round pipe internally providing a collecting channel 111 as seen in FIG. 8.

The holding member 106 is in the form of a short round bar and fitted around the rod 105 as if intersecting the rod. The holding member 106 has at one end thereof a holding face 112 facing outward and having a suction opening 113 formed therein. The suction opening 113 communicates with the collecting channel 111 via a communication hole 114 formed in the rod 105.

The holding face 112 is cut away in the front-to-rear direction over a width slightly greater than the opening diameter of the suction opening 113 to provide an air inlet groove 115. A pair of circular-arc portions which are the portions of the holding face 112 remaining uncut and having a higher level than the bottom of the grooved portion 115 have contact faces 116 for the container. A container engaging protrusion 117 is formed at the midportion of each edge of the contact face, i.e., of the grooved portion 115.

An air nozzle 118 extends through the rotatable rod 105 and the holding member 106 via the communication hole 114 and the suction opening 113, and has an upper end projecting outward from the suction opening 113 and an outlet 119 at the projecting end.

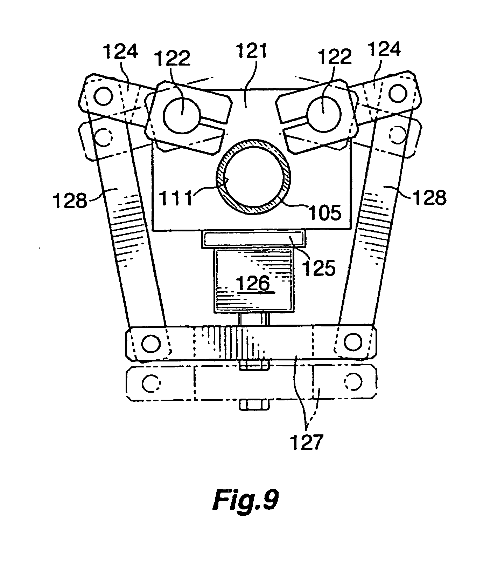

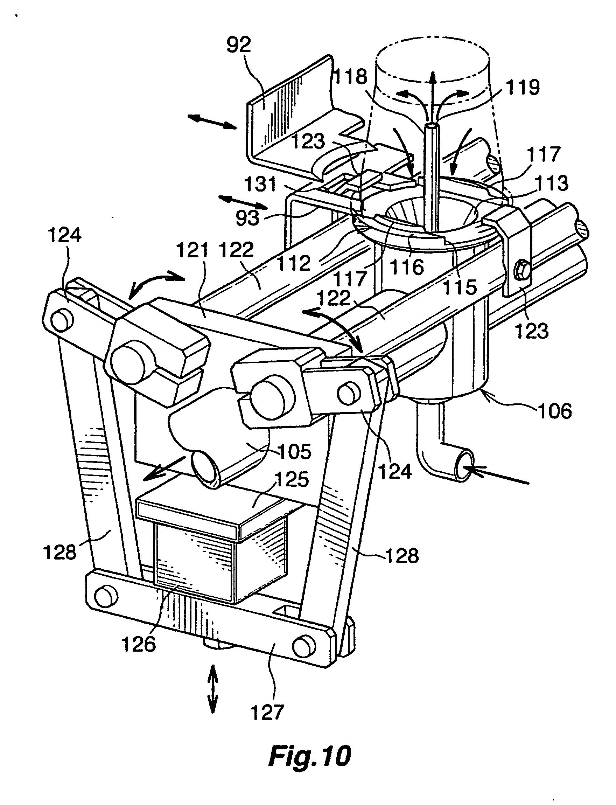

With reference to FIGS. 9 and 10, a pair of left and right support plates 121 orthogonal to the rotatable rod 105 are fixed to the rod 105 and each positioned between the horizontal slide sleeve 104 and the holding member 106 immediately adjacent to the sleeve. A pair of front and rear pivots 122 having the holding members 106 positioned therebetween extend between and supported by the pair of support plates 121. A pair of L-shaped retaining pieces 123 are attached to the respective pivots 122 for each holding member 106.

Each pivot 122 has a left end projecting leftward beyond the left support plate 121, and an arm 124 has a base portion fixed to the projection. At one side of the rotatable rod 105 opposite to the other side thereof where the pivots 122 are provided, the support plate 121 has a fluid pressure cylinder 126 attached thereto by a bracket 125 and directed outward. A connecting bar 127 is attached at an intermediate portion thereof to the piston rod of the cylinder 126. The connecting bar 127 is connected at opposite ends thereof to outer ends of the arms 124 by a pair of links 128.

When advanced, the piston rod of the fluid pressure cylinder 126 rotates the front pivot 122 clockwise and the rear pivot 122 counterclockwise, consequently opening the front and rear retaining pieces 123 to move their outer ends away from the holding face 112. Conversely, when the piston rod is retracted, the pivots 122 are rotated reversely to close the front and rear retaining pieces 123.

As shown in detail in FIG. 10, the lower stoppers 93 are each provided with a cutout 131 for avoiding the interference with the retaining piece 123. When the lower stoppers 93 are closed, their inner ends advance into the air inlet groove 115.

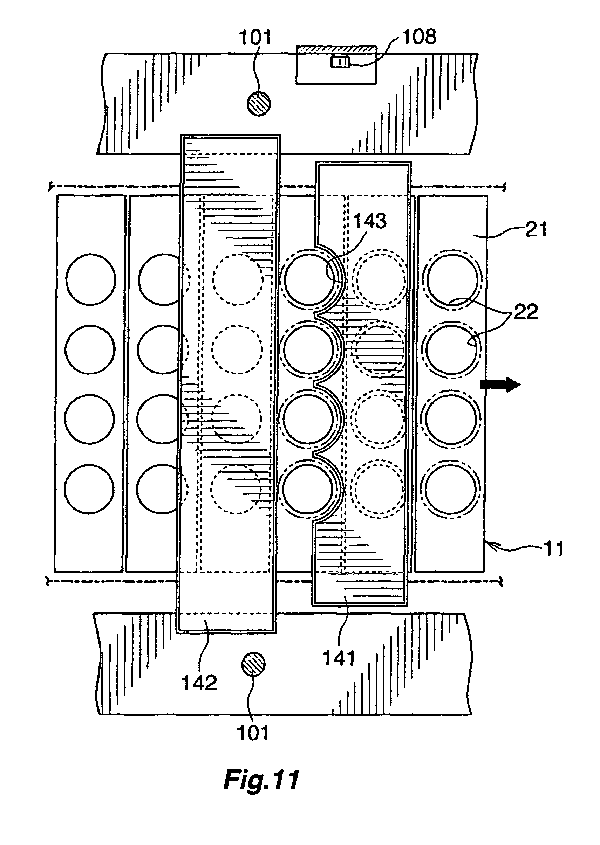

FIGS. 7 and 11 show a horizontal front extraneous matter receptacle 141 provided above a slat 21 in front of the slat 21 halted at the feeding station S, and an L-shaped receptacle 142 provided above a slat 21 in the rear of the halted slat 21. Four semi-circular recesses 143 for avoiding the interference with the containers to be held by the slat 21 are formed in the rear edge portion of the front receptacle 141.

Further with reference to FIG. 7, a container table 151 is provided so as to be movable up and down through the container retaining holes 22 of the slat 21 halted at the feeding station S.

Containers are fed by the operation to be described next.

As indicated in chain lines in FIG. 1, the transfer magazine 45 is in a standby state as retracted to a limit position, with its lead-in end down. The stoppers 78 at the lead-in end are left open, while the stoppers 78 at the lead-out side are closed.

When the four stacks C in the foremost row within the stacker 31 are raised by the operation of the lifter 35, the lifted stacks C are accommodated in the transfer magazine 45, whereupon the stoppers 78 at the lead-in end are closed.

The transfer magazine 45 is advanced by operating the motor 57 and thereby moving the belts 55. During the advance of the magazine 45, the rotary actuator 68 is operated to turn the magazine 45. When the magazine 45 is moved to an advanced limit position, brought to a vertical posture with the lead-out end down and aligned with the separating magazine 33, the stoppers 78 at the lead-out end are opened, whereupon the stacks C in the transfer magazine 45 are transferred to the separating magazine 33.

Upon the transfer of the stacks C, the transfer magazine 45 is retracted and inverted in the meantime in preparation for the subsequent feeding operation.

The opening portions of the lowermost containers of the stacks C in the separating magazine 33 are received by the closed lower stoppers 93, and the inner ends of the upper stoppers 92 as closed are positioned between the opening portions of the lowermost containers and the opening portions of the immediately adjacent containers fitting thereto.

With the front and rear retaining pieces 123 opened and with the holding faces 112 up, the holding members 106 are raised into contact with the opening portions of the respective lowermost containers, whereupon the retaining pieces 123 are closed, and the lower stoppers 93 are opened, whereby the containers are held by the holding members 106 in contact with the holding faces 112.

The holding members 106 having the containers held thereto are turned while being lowered. In the meantime, air is forced out into the containers through the air nozzles 118 and drawn into the collecting channel 111 through the suction openings 113. Since the rate of air intake is made greater than the rate of discharge of air, the quantity of air corresponding to the difference flows into the suction openings 113 through the air inlet grooves 115 to ensure smooth air intake. Extraneous matter is efficiently drawn into the suction openings 113 from inside the containers by the air thus taken in and collected via the channel 111.

If the container turned during descent bears extraneous matter thereon, the extraneous matter is likely to fall off the container during this movement, whereas the falling matter is received by the receptacles 141, 142.

When the holding members 106 are brought down to a lowered limit position with their holding faces 112 down, the retaining pieces 123 are opened, whereupon the containers are released from the holding members 106, received by the container table 151 standing by therebelow and transferred to a slat 21. The holding members 106 releasing the containers are turned upside down, raised and made ready for the subsequent feeding operation.

Although vertical in the foregoing embodiment, the separating magazine 33 may alternatively be leaned insofar as containers are stacked therein in an inverted position including a position facing obliquely downward.

## Claims

1. A container feeding apparatus comprising:
a magazine (33) disposed above container holders (21-22) to be transported in succession to a feeding station (S) and adapted to accommodate a stack of cuplike containers (C), as turned upside down while rendering each container free to fall under gravity, wherein each cuplike container (C) having a bottom and an upright circumferential opening portion defining an opening and
transport means (34) comprising a holding member (106) for taking out the containers (C) in the magazine (33) one by one from the lowermost position of the stack and transporting the container to the container holder (21) while turning the container to position an opening thereof up, said holding member (106) being arranged for releasably holding the container around its upright circumferential opening portion, by means of a holding face (112), **characterized in that**, the holding face (112) has an extraneous matter suction opening (113) formed therein to be opposed to the opening of the container then this is held in an inverted position.

2. A container feeding apparatus according to claim 1, wherein an air nozzle (118) is disposed with an outlet (119) directed to the inside of the container as held by the holding member.

3. A container feeding apparatus according to claim 2, wherein the air nozzle (118) is inserted through the suction opening (113) and has an outlet projecting (119) outward from the suction opening.

4. A container feeding apparatus according to claim 2 or 3, wherein the holding member (106) has a holding face (112) provided with the suction opening (113) and causing the portion of the container defining its opening to come into contact with an edge portion (116) thereof defining the suction opening, and movable retaining pieces (123) capable of releasably holding the container opening portion in contact with the edge portion of the holding face.

5. A container feeding apparatus according to claim 4, wherein the transport means has a horizontal rotatable rod (105) provided with the holding member (106) with the holding face (112) directed radially outwardly of the rod and supported by a lift member (103) so as to be positioned between the container holder and the magazine, and the rotatable rod (105) has a collecting channel (111) formed therein in communication with the suction opening (113).

6. A container feeding apparatus according to claim 5, wherein the transport means comprises a drive mechanism (102) for rotating the rotatable rod (105), moving the lift member (103) upward and downward and operating the retaining pieces (123), the drive mechanism being operable to bring the holding face into contact with the opening portion of the container as turned upside down at the lowermost position of the stack in the magazine, to cause the retaining pieces to hold the container opening portion, to lower and invert the container, and to release the retaining pieces from the container opening portion as directed upward above the container holder (21-22).

7. A container feeding apparatus according to any one of claims 1 to 6, which is provided with lead-in means for guiding the stack into the magazine with the containers turned upside down.

8. A container feeding apparatus according to claim 7, wherein the lead-in means comprises a stacker disposed at one side of the magazine for accommodating the stack with container openings up, and transfer means (45) for transferring the stack from the stacker to the magazine and inverting the stack during the transfer.

## Patentansprüche

1. Eine Behälterzuführvorrichtung mit:
einem Magazin (33), welches oberhalb von Behälterhaltern (21-22) angeordnet ist, die nacheinander zu einer Zuführstation (S) transportiert werden sollen, und das geeignet ist, einen Stapel tassenartiger, auf den Kopf gestellter Behälter (C) aufzunehmen, wobei jeder Behälter unter Schwerkraft frei fallen kann, wobei jeder tassenartige Behälter (C) einen Boden und einen aufrechten, sich in Umfangsrichtung erstreckenden Öffnungsbereich aufweist, welcher eine Öffnung definiert, und
einem Transportmittel (34) mit einem Halteelement (106), um die Behälter (C) an dem Magazin (33) einen nach dem anderen an der untersten Position des Stapels zu entnehmen und den Behälter zu dem Behälterhalter (21) zu transportieren, während der Behälter gewendet wird, um dessen Öffnung oben zu positionieren, wobei das Halteelement (106) angeordnet ist, um den Behälter um seinen sich in Umfangsrichtung erstreckenden Öffnungsbereich herum mittels einer Haltefläche (112) lösbar zu halten,
**dadurch gekennzeichnet, daß** die Haltefläche (112) eine darin ausgebildete Fremdstoff-Ansaugöffnung (113) aufweist, die der Öffnung des Behälters gegenüber liegt, wenn dieser in einer umgekehrten Position gehalten ist.

2. Eine Behälterzuführvorrichtung nach Anspruch 1, wobei eine Luftdüse (118) vorgesehen ist, deren Auslaß (119) auf das Innere des durch das Halteelement gehaltenen Behälters gerichtet ist.

3. Eine Behälterzuführvorrichtung nach Anspruch 2, wobei die Luftdüse (118) durch die Ansaugöffnung (113) eingesetzt ist und einen Auslaß (119) aufweist, der aus der Ansaugöffnung vorsteht.

4. Eine Behälterzuführvorrichtung nach Anspruch 2 oder 3, wobei das Halteelement (106) eine Haltefläche (112) aufweist, welche mit der Saugöffnung (113) versehen ist und den Bereich des Behälters, welcher seine Öffnung definiert, dazu bringt, mit einem Kantenbereich (116) von sich, welcher die Saugöffnung definiert, in Kontakt zu kommen, und bewegbare Halteteile (123) hat, die geeignet sind, den sich in Umfangsrichtung erstreckenden Öffnungsbereich mit dem Kantenbereich der Haltefläche lösbar zu halten.

5. Eine Behälterzuführvorrichtung nach Anspruch 4, wobei das Transportmittel eine horizontale drehbare Stange (105) aufweist, welche mit dem Halteelement (106) mit der Haltefläche (112) versehen ist, die von der Stange radial nach außen gerichtet ist und durch ein Hebel-element (103) gestützt ist, um zwischen dem Behälterhalter und dem Magazin positioniert zu sein, und die drehbare Stange (105) einen darin ausgebildeten, mit der Saugöffnung (113) kommunizierenden Sammelkanal (111) hat.

6. Eine Behälterzuführvorrichtung nach Anspruch 5, wobei das Transportmittel einen Antriebsmechanismus (102) umfaßt, um die drehbare Stange (105) zu rotieren, das Hebelelement (103) nach oben und nach unten zu bewegen und die Halteteile (123) zu betätigen, wobei der Antriebsmechanismus betrieben werden kann, um die Haltefläche in Kontakt mit dem Öffnungsbereich des auf den Kopf gestellten Behälters an der untersten Position des Stapels in dem Magazin zu bringen, um die Halteteile dazu zu bringen, den Behälter-Öffnungs-Bereich zu halten, den Behälter abzusenken und zu wenden und die Halteteile von dem oberhalb der Behälterhalter (21-22) liegenden und nach oben gerichteten sich in Umfangsrichtung erstreckenden Öffnungsbereich zu lösen.

7. Eine Behälterzuführvorrichtung nach einem der Ansprüche 1 bis 6, welche mit Einführungsmitteln versehen ist, um den Stapel mit den auf dem Kopf stehenden Behältern in das Magazin einzuführen.

8. Eine Behälterzuführvorrichtung nach Anspruch 7, wobei das Einführungsmittel einen Stapler umfaßt, welcher an einer Seite des Magazins angeordnet ist, um den Stapel mit den nach oben gerichteten Behälteröffnungen aufzunehmen, und Überführungsmittel (45), um den Stapel aus dem Stapler zu dem Magazin zu überführen und während der Überführung den Stapel umzudrehen.

## Revendications

1. Appareil de chargement de récipients, comprenant:
un magasin (33) disposé au-dessus de porte-récipients (21-22) destinés à être transportés les uns à la suite des autres jusqu'à un poste de chargement (S) et adaptés pour recevoir une pile de récipients en forme de coupelle (C) disposés à l'envers, tout en laissant chaque récipient libre de tomber sous l'effet de la gravité, chaque récipient en forme de coupelle (C) comportant un fond et une partie d'ouverture circonférentielle verticale qui définit une ouverture, et
des moyens de transport (34) comprenant un organe de maintien (106) destiné à extraire un par un les récipients (C) contenus dans le magasin (33), à partir de la position la plus basse de la pile, et à transporter chaque récipient jusqu'au porte-récipient (21) tout en retournant le récipient pour positionner l'ouverture de celui-ci en haut, ledit organe de maintien (106) étant conçu pour maintenir de manière séparable le récipient autour de la partie d'ouverture circonférentielle verticale de celui-ci au moyen d'une face de maintien (112), **caractérisé en ce que** la face de maintien (112) comporte une ouverture d'aspiration de corps étrangers (113) formée en elle de manière à faire face à l'ouverture du récipient lorsque celui-ci est maintenu dans une position inversée.

2. Appareil de chargement de récipients selon la revendication 1, dans lequel une buse d'air (118) est disposé en ayant son orifice de sortie (119) dirigé vers l'intérieur du récipient maintenu par l'organe de maintien.

3. Appareil de chargement de récipients selon la revendication 2, dans lequel la buse d'air (118) est insérée à travers l'ouverture d'aspiration (113) et possède un orifice de sortie (119) qui fait saillie à l'extérieur de l'ouverture d'aspiration.

4. Appareil de chargement de récipients selon la revendication 2 ou 3, dans lequel l'organe de maintien (106) possède une face de maintien (112) comportant l'ouverture d'aspiration (113) et obligeant la partie du récipient qui définit l'ouverture de celui-ci à venir en contact avec sa partie de bord (116) définissant l'ouverture d'aspiration, et des éléments de retenue mobiles (123) capable de maintenir de manière séparable la partie d'ouverture du récipient en contact avec la partie de bord de la face de maintien.

5. Appareil de chargement de récipients selon la revendication 4, dans lequel les moyens de transport comportent une tige rotative horizontale (105) munie de l'organe de maintien (106) dont la face de maintien (112) est dirigée radialement vers l'extérieur de la tige, et supportée par un organe de levage (103) de manière à être positionnée entre le porte-récipient et le magasin, la tige rotative (105) comportant un canal de collecte (111) formé en elle pour communiquer avec l'ouverture d'aspiration (113).

6. Appareil de chargement de récipients selon la revendication 5, dans lequel les moyens de transport comprennent un mécanisme d'entraînement (102) destiné à faire tourner la tige rotative (105), à faire monter et descendre l'organe de levage (103) et à actionner les éléments de retenue (123), le mécanisme d'entraînement étant apte à agir pour amener la face de maintien en contact avec la partie d'ouverture du récipient disposé à l'envers au niveau de la position la plus basse de la pile contenue dans le magasin, pour obliger les éléments de retenue à maintenir la partie d'ouverture du récipient, pour abaisser et inverser le récipient et pour séparer les éléments de retenue de la partie d'ouverture du récipient dirigée vers le haut au-dessus du porte-récipient (21-22).

7. Appareil de chargement de récipients selon l'une quelconque des revendications 1 à 6, comportant des moyens d'amenée destinés à guider l'entrée dans le magasin de la pile de récipients disposés à l'envers.

8. Appareil de chargement de récipients selon la revendication 7, dans lequel les moyens d'amenée comprennent un chargeur disposé d'un côté du magasin pour recevoir la pile de récipients dont les ouvertures sont situées en haut, et des moyens de transfert (45) destinés à transférer la pile du chargeur au magasin et à inverser la pile au cours du transfert.
